Europäisches Patentamt

European Patent Office

Office européen des brevets

(19)

(11) **EP 0 718 668 A2**

(12) **EUROPÄISCHE PATENTANMELDUNG**

(43) Veröffentlichungstag:
    **26.06.1996  Patentblatt 1996/26**

(51) Int. Cl.$^6$: **G02F 1/313**,  G02B 6/125

(21) Anmeldenummer: **95119685.6**

(22) Anmeldetag: **14.12.1995**

(84) Benannte Vertragsstaaten:
    **DE ES FR GB IT**

(30) Priorität: **22.12.1994 DE 4445848**

(71) Anmelder: **Alcatel SEL Aktiengesellschaft**
    **D-70435 Stuttgart (DE)**

(72) Erfinder: **Baums, Dieter**
    **D-71636 Ludwigsburg (DE)**

(74) Vertreter: **Pechhold, Eberhard, Dipl.-Phys. et al**
    **Alcatel SEL AG**
    **Patent- und Lizenzwesen**
    **Postfach 30 09 29**
    **70449 Stuttgart (DE)**

(54) **Optischer Raumschalter mit kurzer Baulänge**

(57)     Es wird ein optischer Raumschalter mit auf demselben Substrat angeordneten, miteinander verbundenen, verzweigten oder unverzweigten, gesteuert lichtverstärkenden oder gesteuert lichtabsorbierenden oder aber Licht unverstärkt weiterleitenden Wellenleiterbereichen angegeben, bei dem elektrisch steuerbare Wellenleiterbereiche in Krümmungen der Wellenleiter ausgebildet sind und eine wesentlich kürzere Baulänge des gesamten hochintegrierten Bauelementes ermöglichen.

EP 0 718 668 A2

## Beschreibung

Die Erfindung betrifft einen optischen Raumschalter gemäß dem Oberbegriff des Patentanspruchs 1.

Optische Raumschalter werden benötigt, wenn Licht vorgegebener Wellenlänge oder aus einer Überlagerung von Licht mehrerer Wellenlängen bestehendes Licht von einem einzelnen, ankommenden Wellenleiter selektiv auf einen oder auf eine Auswahl aus einer Vielzahl von abgehenden Wellenleitern überzuleiten ist. Den Verzweigungungsarmen einfacher Wellenleiterverzweigungen werden hierzu steuerbare, aktive Wellenleiterbereiche angefügt und die so entstehenden, steuerbaren Verzweigungen dann kaskadenartig hintereinandergeschaltet. Jede Verzweigung wird elektrisch so angesteuert, daß das in den jeweils gewünschten Verzweigungsarm eingestrahlte Licht verstärkt, das in den anderen Verzweigungsarm eingestrahlte Licht dagegen absorbiert oder zumindest abgeschwächt wird, die Verzweigung somit als optischer Wechselschalter arbeitet. Eine Kaskade derartiger Verzweigungen kann auch als optischer Verteiler arbeiten, wenn Licht in mehreren parallelen Verzweigungsarmen verstärkt wird.

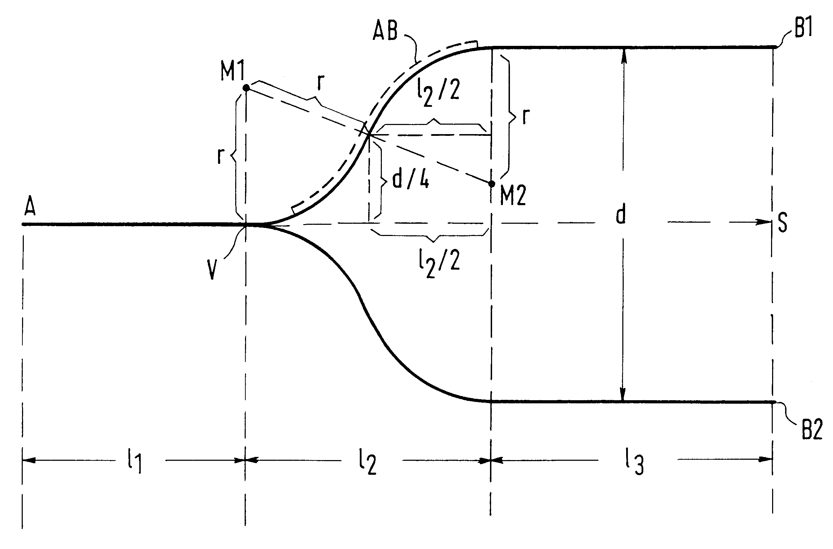

Ein kaskadierter derartiger Raumschalter ist z.B. in der DE 43 04 993 A1 beschrieben. Die gesteuerten aktiven Bereiche sind dort als gerade Wellenleiterstücke ausgebildet (Fig. 1 u. 2) und durch gerade, oder, wo dies notwendig ist, durch gekrümmte passive Wellenleiterbereiche miteinander verbunden. Auch die in der o.g. DE 43 04 993 A1, in Spalte 1, Abs. 1 und Abs. 2 zitierten Druckschriften zeigen nur optische Schalter mit geraden optisch aktiven Wellenleiterbereichen.

Sind eine Vielzahl optischer Verzweigungen in einem optischen Raumschalter zu integrieren, so macht sich die Tatsache, daß jeder Verzweigung mindestens zwei gerade, aktive Wellenleiterbereiche hinzugefügt werden müssen, im Hinblick auf die Baulänge der gesamten hochintegrierten Schaltung nachteilig bemerkbar: Da die Substratgröße begrenzt ist, können auf einem Substrat nicht beliebig viele Verzweigungen untergebracht werden und es müssen aufwendige Glasfaserverbindungen zwischen mehreren, auf getrennten Substraten befindlichen integrierten Teilschaltungen hergestellt werden.

Es ist deshalb Aufgabe der Erfindung, die Baulänge der steuerbaren Verzweigungen zu verkürzen und damit einen höheren Integrationsgrad bei kaskadierten optischen Raumschaltern zu erreichen.

Diese Aufgabe wird durch die Merkmale des Patentanspruchs 1 gelöst.

Durch die Verlagerung der optisch aktiven Bereiche in die ohnehin notwendigen gekrümmten Teile der Wellenleiter werden besondere gerade, aktive Wellenleiterstücke überflüssig. Außerdem lassen sich gekrümmte aktive Bereiche stärker krümmen und damit kürzer ausbilden als entsprechende passive Wellenleiter, um dieselbe Distanz der abgehenden Wellenleiter voneinander zu erreichen.

Gekrümmte aktive Welenleiterbereiche sind zwar z.B. im Zusammenhang mit sogenannten Y-Lasern bereits bekannt (siehe z.B. Aufsatz von O. Hildebrand et al in "Journal of Lightwave Technology", Vol. 11, No. 12, December 1993, Seiten 2066 bis 2072, insbesondere Absatz VII auf Seite 2071), sie sind dort jedoch nicht, wie für die Erfindung notwendig, den einzelnen Verzweigungsarmen zugeordnet, sondern gehören einem die eigentliche Verzweigung sowie Teile der an diese anschließenden Wellenleiter umfassenden, zentralen Bereich an. Wird ein Y-Laser als optischer Raumschalter eingesetzt, müssen zur separaten Ansteuerung der Verzweigungsarme deshalb die an den zentralen Bereich anschließenden, aktiven Armsegmente verwendet werden. Diese können somit nicht zur Verkürzung des Raumschalters eingespart werden.

Bei dem optischen Raumschalter nach der Erfindung können die einzelnen Verzweigungen dagegen sehr viel kürzer ausgeführt werden, was bewirkt, daß ein Substrat wesentlich mehr optische Verzweigungen aufnehmen kann, als bei Ausbildung der aktiven Bereiche als gerade Wellenleiterstücke.

Ausgestaltungen des optischen Raumschalters nach der Erfindung sind in den Unteransprüchen angegeben.

So enthält Anspruch 2 eine Vorschrift für eine einen hohen Integrationsgrad zulassende, vorteilhafte Dimensionierung der gekrümmten aktiven Wellenleiterbereiche.

Anspruch 3 betrifft eine Maßnahme, die Streuungsverluste des Lichtes, die infolge der Krümmungen in den gekrümmten Wellenleiterbereichen auftreten, reduziert.

Aufgrund einer Figur soll nun ein Ausführungsbeispiel für den optischen Raumschalter nach der Erfindung beschrieben werden.

Die Figur zeigt eine einfache optische Verzweigung mit einem ankommenden optischen Wellenleiter A, der sich an einem Punkt V in zwei abgehende Wellenleiter B1 und B2 verzweigt. Die beiden abgehenden Wellenleiter haben in ihren geraden Teilen einen Abstand $d$ voneinander und verlaufen symmetrisch in Bezug auf eine Achse S, die in Richtung der Verlängerung des ankommenden Wellenleiters A verläuft. Zur Gesamtlänge der Verzweigung trägt der ankommende Wellenleiter A den Betrag $l_1$, der Bereich der gekrümmten Teilstücke der abgehenden Wellenleiter $B_1$ und $B_2$ den Betrag $l_2$ und der Bereich der geraden Teilstücke der abgehenden Wellenleiter den Betrag $l_3$ bei. Optisch aktive Bereiche AB der dargestellten einfachen Verzweigung werden von den gekrümmten Teilstücken der abgehenden Wellenleiter B1 und B2 gebildet. Sie sind voneinander getrennt ansteuerbar und setzen sich aus je zwei Kreisbogenstücken zusammen, die jeweils zu Sektoren von Kreisen um einen Mittelpunkt M1 und einen Mittelpunkt M2 gehören. Wird der Radius $r$ dieser Kreise z.B. zu $r \geq d/4$ gewählt, dann nehmen die Kreissektoren einen Winkel von $\leq 90$ Grad an. Wird im Extremfalle $r = d/4$, so wird die Länge des Bereiches mit den gekrümmten Teilen der Wellenleiter B1 und B2 $l_2 = d/2$. Die Kreise können auch unterschiedliche Radien besitzen und die Kreisbögen unterschiedlich breite Kreissektoren begrenzen.

Wird ein Abstand von d = 170 bis 260 µm als möglicher Wert für nebeneinanderliegende Faserkopplungen eingesetzt, so kann die Längenerstreckung $l_2$ des die gekrümmten Wellenleiterteile enthaltenden Bereichs der Verzweigung kleiner als 130 µm ausgelegt werden, was eine erhebliche Verkürzung gegenüber aus passiven Wellenleitern gebildeten, gekrümmten Bereichen, die in der Regel >2 mm lang sind, bedeutet. Zu dieser Verkürzung tritt noch die Längeneinsparung, die dadurch eintritt, daß keine optisch aktiven, geraden Wellenleiterstücke mehr benötigt werden. Diese Längeneinsparung beträgt pro Verzweigungsstufe nochmals ca. 250 µm.

Die aktiven und passiven Wellenleiterbereiche können, wie in der eingangs genannten Patentanmeldung beschrieben, in einem einzigen Beschichtungsprozeß hergestellt werden, indem Beschichtungsverfahren verwendet werden, die das Aufwachsen unterschiedlich dikker Schichten in lokal abgegrenzten Bereichen zulassen.

Streuungsverluste in den gekrümmten aktiven Wellenleiterbereichen werden dadurch reduziert, daß die Wellenleiter dort breiter ausgebildet werden als in geraden Wellenleiterbereichen.

**Patentansprüche**

1. Optischer Raumschalter mit auf demselben Substrat angeordneten, miteinander verbundenen, verzweigten oder unverzweigten, voneinander unabhängig steuerbaren lichtverstärkenden oder voneinander unabhängig steuerbaren lichtabsorbierenden (optisch aktiven) oder aber Licht unverstärkt weiterleitenden (passiven) Wellenleiterbereichen **dadurch gekennzeichnet,** daß voneinander unabhängig steuerbare optisch aktive Wellenleiterbereiche (AB) in Krümmungen der Wellenleiter ausgebildet sind.

2. Optischer Raumschalter nach Anspruch 1, dadurch gekennzeichnet, daß die gekrümmten aktiven Wellenleiterbereiche, in Ausbreitungsrichtung des Lichtes gesehen, jeweils im Anschluß an eine Wellenleiterverzweigung (V) folgen und aus je zwei sich aneinander anschließenden, kreisbogenförmigen Wellenleiterstücken bestehen, die entgegengesetzt zueinander gekrümmt sind und deren Kreisbogenradien (r) jeweils größer oder gleich einem Viertel des Abstandes (d) von sich an die gekrümmten Wellenleiterbereiche anschließenden, geraden Wellenleiterbereichen voneinander sind.

3. Optischer Raumschalter nach Anspruch 1 oder Anspruch 2, dadurch gekennzeichnet, daß der Querschnitt der gekrümmten, aktiven Wellenleiterbereiche (AB) breiter ist als der der geraden Wellenleiterbereiche (A).

EP 0 718 668 A2

AB

B1

M1

r

$l_2/2$

r

r

A

V

$d/4$

M2

$l_2/2$

d

S

B2

$l_1$

$l_2$

$l_3$